(19) Europäisches Patentamt

European Patent Office

Office européen des brevets

(11) EP 0 488 867 B1

(12) FASCICULE DE BREVET EUROPEEN

(45) Date de publication et mention
de la délivrance du brevet:
**12.02.1997 Bulletin 1997/07**

(51) Int. Cl.$^6$: **C01B 39/00**, B01J 29/06,
C10G 11/05, C07C 5/22,
C07C 2/54, B01J 29/18

(21) Numéro de dépôt: 91403171.1

(22) Date de dépôt: 25.11.1991

(54) **Procédé de désalumination de zéolites synthétiques et zéolite bêta essentiellement silicique**

Verfahren zur Entaluminierung von synthetischen Zeolithen und von einem im wesentlichten Kieselsäure-haltigen Beta-Typ Zeolith

Dealumination process for synthetic zeolites and essentially silicic beta-type zeolite

(84) Etats contractants désignés:
**BE DE GB IT NL**

(30) Priorité: **26.11.1990 FR 9014749**

(43) Date de publication de la demande:
**03.06.1992 Bulletin 1992/23**

(73) Titulaire: **ELF AQUITAINE**
**92400 Courbevoie (FR)**

(72) Inventeurs:
• **Fajula, François**
**F-34100 Montpellier (FR)**
• **Bourgeat-Lami, Elodie**
**1444 route de Mende, F-34090 Montpeller (FR)**
• **Zivkov, Catherine**
**F-64300 Orthez (FR)**

• **Des Courières, Thierry**
**F-69007 Lyon (FR)**
• **Anglerot, Didier**
**F-64140 Lons (FR)**

(74) Mandataire: **Boillot, Marc et al**
**Elf Aquitaine Production,**
**Département Propriété Industrielle,**
**Tour Elf,**
**Cédex 45**
**92078 Paris La Défense (FR)**

(56) Documents cités:
**EP-A- 0 095 304**

• **WORLD PATENTS INDEX LATEST week 8642, Derwent Publications Ltd., London, GB; AN 86-275939 & JP-A-61 201 618 (SHIN NENRYOYU KAHIA) 6 Septembre 1986**

## Description

Cette invention concerne un procédé de désalumination de zéolithes à larges pores et à rapport silice/alumine élevé.

Les zéolithes sont des aluminosilicates cristallisés appartenant au groupe des tectosilicates. Leur structure tridimensionnelle est formée d'un enchaînement de tétraèdres $SiO_4$ et $AlO_4$ mettant en commun des sommets oxygénés. Cet agencement délimite des canaux et cavités dans lesquels viennent se loger les cations compensant le déficit de charge lié à la présence de l'aluminium dans la charpente covalente et les molécules d'eau.

Certaines de ces zéolithes sont d'origine naturelle. On connaît également un nombre croissant de zéolithes synthétiques qui n'ont pas toujours d'équivalent naturel.

Les zéolithes peuvent être regroupées en trois familles distinctes suivant le diamètre d'ouverture de leurs canaux. On distingue des zéolithes à larges pores, à petits pores et les zéolithes à pores intermédiaires.

Les zéolithes à larges pores ont un diamètre d'ouverture de leurs canaux supérieur ou égal à 0,7nm. Les zéolithes X, Y, la ZSM-20 et la zéolithe bêta font partie de cette famille.

Les zéolithes à larges pores ont un intérêt particulier comme catalyseurs de transformation d'hydrocarbures, notamment comme catalyseurs de craquage catalytique en pétrochimie et raffinage.

Les larges pores sont également avantageux pour l'adsorption de molécules encombrantes.

La stabilité thermique des zéolithes croît avec l'augmentation du rapport silice/alumine. Le rapport silice/alumine est variable selon le type de zéolithe, il peut également légèrement varier en fonction des conditions de synthèse. Il est cependant difficile d'obtenir par synthèse des zéolithes à larges pores avec des rapports silice/alumine élevés. Pour l'obtention de ces zéolithes à rapport silice/alumine élevé on a recours à la désalumination post-synthèse.

Les zéolithes obtenues par désalumination poussée sont particulièrement utiles comme adsorbants organophiles puisque le départ des atomes d'aluminium diminue les effets de champ dans les pores.

Il existe de nombreux procédés de désalumination de zéolithes. En général il s'agit de traitements hydrothermiques ou chimiques de la forme échangée de la zéolithe. Ces formes échangées sont obtenues par décomposition thermique de la forme brute de synthèse, qui renferme le structurant organique utilisé lors de la synthèse, suivi d'un traitement d'échange à l'ammonium, au proton ou à un autre cation.

La désalumination peut être aussi obtenue par traitement acide. Dans ce cas, la forme échangée corespond à la forme protonée. Par exemple, selon le brevet américain US 3 442 795, une zéolithe dans sa forme protonée est soumise à un traitement acide suivi par la chelatation de l'aluminium.

La demande de brevet européen EP-A-95 304 décrit la désalumination de la zéolithe bêta par traitement acide de sa forme protonée. Les zéolithes bêta obtenues par traitement à l'acide chlorhydrique, de préférence de 0,1 à 2N ont un rapport silice/alumine qui varie entre 40 et 400. Pour un rapport silice/alumine de 40 la zéolithe garde sa cristallinité à 100%. Par contre pour un rapport silice/alumine de 280, la cristallinité n'est que 75%.

La presente invention vise à désaluminer les zéolithes synthétiques à larges pores et à rapport silice/alumine élevé, sans perte notable de leur cristallinité.

La présente invention a pour objet un procédé de désalumination des zéolites synthétiques, dont le diamètre d'ouverture des pores est supérieur ou égal à 0,7nm et le rapport silice/alumine supérieur ou égal à 6, consistant à attaquer la forme brute de synthèse de la zéolithe renfermant le structurant organique par un acide, ce procédé étant caractérisé en ce que la zéolithe est une zéolithe bêta, l'acide est une solution acide de molarité comprise entre 2 et 15N, et de préférence entre 5 et 15N et la désalumination est réalisée à une température comprise entre 20 et 100°C et de préférence entre 70 et 90°C.

Nous entendons par forme brute de synthèse, la forme non calcinée, qui renferme encore le structurant organique. Elle contient également les cations compensant le déficit de charge lié à la présence de l'aluminium. Ce cation provient d'un métal alcalin au moment de la synthèse, mais il peut être remplacé par la suite par un métal quelconque.

Un premier avantage de cette méthode est la possibilité d'obtenir une zéolithe bêta à larges pores entièrement désaluminée.

Un second avantage de ce procédé est la récupération du structurant organique utilisé lors de la synthèse. Selon les procédés de l'art antérieur, les ammoniums quaternaires organiques, utilisés comme structurant, sont décomposés par calcination. Ces produits sont en général très coûteux et conduisent par calcination à des produits nocifs pour l'environnement, comme les oxydes d'azote. Il s'agit donc d'un avantage économique et écologique important.

Un troisième avantage du procédé est la possibilité d'effectuer la désalumination sans séparation préalable de la zéolithe bêta de ses eaux-mères de synthèse.

Il est également possible de traiter la zéolithe bêta sous forme brute de synthèse mais après séparation des eaux-mères de synthèse.

La formule de la zéolithe brute de synthèse correspond en général à :

$$\frac{x}{n} M_2O \cdot yS \cdot Al_2O_3 \cdot zSiO_2 \cdot wH_2O$$

où

M est un cation métallique de valence n,
S est l'agent structurant
$\frac{x}{n}$ est inférieur à 1
y va de 0,5 à 8
z va de 6 à 200
w va de 4 à 50.

La zéolithe bêta est une zéolithe synthétique à larges pores, de symétrie tétragonale.

Sa synthèse est décrite dans un brevet MOBIL de 1967 (US 3 308 069 ; Re 28 341).

Cette zéolithe est formée par cristallisation hydrothermique de sources d'aluminium et de silicium en présence d'un structurant et éventuellement un métal alcalin ou alcalino-terreux ou un mélange de ces métaux.

La source d'aluminium peut être l'aluminate de sodium. La source de silicium peut être par exemple un sol de silice, de la silice amorphe solide ou un silicate. Il est également possible d'utiliser les aluminosilicates amorphes ou cristallins comme sources de silicium et d'aluminium. L'alcalinité du milieu peut être ajustée par l'hydroxyde de sodium.

Pour la synthèse de la zéolithe bêta, on utilise en général l'ion tétraéthylammonium comme structurant. Il est introduit sous forme d'hydroxyde ou de sel.

Le rapport silice/alumine de la zéolithe bêta brute de synthèse peut varier de 10 à 200. Le procédé selon l'invention permet d'augmenter ce rapport, indépendamment de sa valeur de départ.

La désalumination est accompagnée par le départ du structurant, par exemple, de l'ion tétraéthylammonium. Ce dernier peut être récupéré du milieu réactionnel. Le tétraéthylammonium est un composé particulièrement coûteux, sa récupération présente un avantage évident. Selon l'art antérieur, le structurant est éliminé par calcination. Pendant cette opération, la molécule de structurant est décomposée. Le tétraéthylammonium par exemple se décompose en oxydes d'azote et de carbone et en eau.

L'acide utilisé pour la désalumination est un acide inorganique ou organique fort.

Parmi les acides organiques forts on peut mentionner l'acide formique, l'acide trichloroacétique ou l'acide trifluoroacétique.

Parmi les acides inorganiques forts, nous pouvons mentionner l'acide chlorhydrique, l'acide sulfurique, ou l'acide nitrique. L'acide nitrique convient tout particulièrement.

La concentration de l'acide est le paramètre principal qui détermine le degré de désalumination. A faible concentration la désalumination reste partielle. Par contre la désalumination avec un acide, de préférence de l'acide nitrique de concentration comprise entre environ 10 et 15 N donne un produit pratiquement entièrement désaluminé, donc essentiellement silicique.

Pour une concentration d'acide donnée, le taux de désalumination dépend également du volume d'acide utilisé, de la température et de la durée du traitement.

Par ailleurs, on utilise 5 à 150 mP. de solution acide par gramme de zeolithe sèche ou en suspension

Le rapport silice/alumine de la zéolithe bêta essentiellement silicique ainsi obtenue est supérieur ou égal à 800 et sa cristallinité est supérieure ou égale à 80 %. Le rapport silice/alumine peut atteindre environ 4000 ou plus, ce qui signifie que la concentration en aluminium est inférieure à 0,02 % en poids.

A notre connaissance la forme essentiellement silicique de la zéolithe bêta est un produit nouveau.

La durée de la désalumination est variable, elle est en général entre 15 minutes et 40 heures et de préférence entre 30 minutes et 20 heures.

La technique d'introduire l'acide dans le milieu de synthèse de la zéolithe Béta sans isoler au préalable celle-ci de ses eaux mères, permet de récupérer quasi quantitativement le structurant engagé dans la synthèse. La récupération peut être effectuée par exemple par extraction liquide/liquide ou sur résine cationique. Ce structurant récupéré peut être utilisé pour une nouvelle synthèse de zéolithe.

Après désalumination le solide est séparé du milieu réactionnel, par exemple par filtration ou centrifugation. Le solide est ensuite lavé et séché.

Après la désalumination le rapport silicium/aluminium est déterminé par analyse élémentaire. La cristallinité des solides est mesurée par diffraction des rayons X. On constate que la désalumination n'entraîne que de très faibles pertes de cristallinité. La zéolithe bêta essentiellement silicique conserve au moins 80% de sa cristallinité originale.

En soumettant la zéolithe bêta désaluminée à une calcination de 10 heures à 750°C sous flux d'air, aucune perte de cristallinité n'a été constatée, ce qui prouve la bonne stabilité thermique du solide.

Les zéolithes bêta, partiellement désaluminées possèdent des sites acides forts et une bonne stabilité thermique. Elles sont d'excellents catalyseurs de transformation des hydrocarbures et notamment des catalyseurs de craquage, d'isomérisation et d'alkylation. Leur efficacité est remarquablement stable dans le temps.

Leur caractère hydrophobe est fonction du degré de désalumination. Les zéolithes et particulièrement la zéolithe bêta, essentiellement silicique ont un caractère hydrophobe/organophile très marqué. Leur grande capacité d'adsorption sélective vis à vis de molécules organiques est le résultat de ce caractère organophile lié au départ des atomes d'aluminium et en même temps à leur porosité importante.

Cette porosité importante a été confirmée par des mesures d'adsorption d'azote à 77°K qui conduisent pour la zéolithe bêta à une aire spécifique, selon la méthode BET de 440m$^2$/g et un volume poreux de 0,21ml/g.

Le caractère hydrophobe/organophile de la zéolithe bêta désaluminée est déterminé par le test butanol décrit dans le brevet européen EP-13451. Ce test est une mesure de la sélectivité d'adsorption des absorbants zéolithiques pour des molécules organiques, en cas de compétition entre l'adsorption d'eau et de molécules organiques moins polaires.

Grâce à sa forte affinité pour les molécules organiques moins polaires que l'eau, la zéolithe bêta désaluminée et particulièrement la zéolithe bêta essentiellement silicique peut être utilisée comme adsorbant pour éliminer les traces de molécules organiques de l'eau ou de l'air.

La zéolithe bêta désaluminée selon l'invention peut être utilisée pure, aussi bien pour la catalyse que l'adsorption. Il est également possible de la mettre en forme de granulés, d'extrudés, de billes avec l'aide d'un liant, comme une argile, l'alumine, la silice ou une silice-alumine.

Il est également possible d'utiliser la zéolithe bêta en combinaison avec une autre zéolithe.

Les exemples suivants illustrent l'invention sans toutefois la limiter.

EXEMPLE 1

Une zéolithe bêta est synthétisée en utilisant un gel de composition : 1 Al$_2$O$_3$ 1,53Na$_2$O 6,3TEA$_2$O 35SiO$_2$ 570H$_2$O après un mûrissement de 24 heures à la température ambiante, le gel est chauffé pendant 48 heures à 150°C. Le solide est récupéré par filtration.

La structure déterminée par rayons X correspond à la zéolithe bêta. La cristallinité est de 100%.

EXEMPLES 2 à 8

5g de zéolithe bêta de l'exemple 1, 100% cristalline dont la composition en moles d'oxydes correspond à : 0,06 Na$_2$O, TEA$_2$O, Al$_2$O$_3$, 32SiO$_2$, 8,1H$_2$O a été traité par 500ml d'une solution d'acide nitrique 2,2N à 12N à 80°C pendant 4 heures. Le solide est isolé par filtration puis lavé à l'eau.

Après traitement le rapport silicium/aluminium a été déterminé par analyse élémentaire, la cristallinité des solides a été mesurée par diffraction des rayons X et leur capacité d'adsorption d'eau et de n-hexane a été évaluée par gravimétrie.

Après une calcination à 550°C pendant 10 heures sous flux d'air aucune perte de cristallinité n'a été constatée.

Le tableau 1 résume les rapports silice/alumine, la cristallinité et les capacités d'adsorption des échantillons en fonction de la concentration de l'acide nitrique.

TABLEAU 1

| EX. | Concentration en acide mole/l | SiO$_2$/Al$_2$O$_3$ | % cristallinité | Capacité d'adsorption % poids | |
|---|---|---|---|---|---|
| | | | | H$_2$O | n-hexane |
| 2 | 2,2 | 46 | 100 | 5,0 | 17 |
| 3 | 2,9 | 56 | 100 | 4,5 | 17 |
| 4 | 4,3 | 74 | 100 | 4,1 | 18 |
| 5 | 5,7 | 164 | 80 | 2,6 | 19 |
| 6 | 7,2 | 270 | 85 | 1,5 | 16 |
| 7 | 11,5 | 850 | 80 | 1,0 | 14 |
| 8 | 12 | >4000 | 80 | 1,0 | 12 |

EXEMPLE 9

Une zéolithe bêta est cristallisée dans les conditions de l'exemple 1.

286 g de la suspension contenant la zéolithe et les eaux-mères est traitée par 2 l d'une solution d'acide nitrique 14,4N à 80°C, pendant 24 heures.

A la suite du traitement, on récupère 47 g de zéolithe bêta, 100 % cristalline et dont le rapport Si/Al est égal à 950.

Le tétraéthylammonium contenu dans les eaux-mères est récupéré sur résine cationique.

EXEMPLE 10

La zéolithe bêta désaluminée selon l'exemple 4 a été utilisé comme catalyseur de craquage de l'isooctane, à 360°C, 1 bar de pression totale, un rapport $N_2$/hydrocarbure de 70 et une vitesse spatiale (poids d'hydrocarbure/poids zéolithe/ heure) de $1h^{-1}$. La conversion est de 30%, elle est stable dans le temps.

EXEMPLE 11

La zéolithe bêta désaluminée selon l'exemple 4 a été utilisée comme catalyseur de craquage du n-heptane, à 400°C, 1 bar de pression totale, un rapport $N_2$/hydrocarbure de 68 et une vitesse spatiale de $0,23h^{-1}$. La conversion est de 20%, stable dans le temps.

EXEMPLE 12

Nous avons déterminé la sélectivité d'adsorption sur zéolithe bêta désaluminée des molécules organiques en compétition avec de l'eau.

La zéolithe de l'exemple 8 a été activée par chauffage à l'air à 550°C pendant 10 heures. Après chauffage, 0,5 g de la poudre de zéolithe est mise en suspension dans une solution de 1% poids de butanol dans l'eau. La suspension est agitée 2 heures, temps suffisant pour que l'équilibre soit atteint.

L'analyse de la zéolithe après adsorption montre une capacité d'adsorption de 12% poids en butanol. La concentration résiduelle en butanol dans l'eau est de 0,4% poids.

EXEMPLE 13

Le même test effectué sur la zéolithe de l'exemple 9 donne une concentration résiduelle en butanol de 0,45 % poids, ce qui correspond à une capacité d'adsorption de 11 % poids.

## Revendications

1.  Procédé de désalumination de zéolithes synthétiques à larges pores dont le diamètre d'ouverture des canaux est supérieur ou égal à 0,7 nm et le rapport silice/alumine supérieur ou égal à 6, consistant à attaquer la forme brute de synthèse de la zéolithe renfermant le structurant organique par un acide caractérisé en ce que ladite zéolithe est une zéolithe Bêta, l'acide est une solution acide de molarité comprise entre 2 et 15N et de préférence entre 5 et 15N et la désalumination est réalisée à une température comprise entre 20 et 100°C et de préférence entre 70 et 90°C.

2.  Procédé selon la revendication 1 caractérisé en ce que la zéolithe brute de synthèse correspond à la formule :

$$\tfrac{x}{n} M_2O . yS . Al_2O_3 . z SiO_2 . wH_2O$$

où

M est un cation métallique de valence n,
S est l'agent structurant
$\tfrac{x}{n}$ est inférieur à 1
y va de 0,5 à 8
z va de 6 à 200
w va de 4 à 50

3.  Procédé selon la revendication 1 ou 2 caractérisé en ce que la zéolithe brute de synthèse est séparée de ses eaux-mères avant l'attaque acide.

4.  Procédé selon la revendication 1 ou 2 caractérisé en ce que la zéolithe brute de synthèse n'est pas séparée de ses eaux-mères avant l'attaque acide.

5.  Procédé selon l'une des revendications 1 à 4 caractérisé en ce que l'acide est un acide organique fort comme l'acide formique, l'acide trichloroacétique ou l'acide trifluoroacétique.

6. Procédé selon l'une des revendications 1 à 4 caractérisé en ce que l'acide est un acide inorganique fort, comme l'acide chlorhydrique, l'acide sulfurique ou l'acide nitrique, de préférence l'acide nitrique.

7. Procédé selon l'une des revendications 1 à 6 caractérisé en ce qu'on utilise 5 à 150 ml de solution acide par gramme de zéolithe sèche ou en suspension.

8. Procédé selon l'une des revendications 1 à 7 caractérisé en ce que la durée de désalumination est entre 1 et 40 heures et de préférence entre 3 et 30 heures.

9. Utilisation des zéolithes Bêta désaluminées par le procédé selon l'une des revendications 1 à 8 dans les catalyseurs de craquage en pétrochimie et en raffinage.

10. Adsorbant organophile sélectif caractérisé en ce qu'il renferme une zéolithe, désaluminée par le procédé selon l'une des revendications 1 à 8.

11. Zéolithe Bêta essentiellement silicique caractérisée par un rapport silice/alumine supérieur ou égal à 800 et une cristallinité supérieure ou égale à 80 %.

12. Zéolithe selon la revendication 11 caractérisée par un rapport silice/alumine supérieur ou égal à 4000 et une cristallinité supérieure ou égale à 80 %.

**Claims**

1. Process for the removal of aluminium from synthetic zeolites having wide pores of which the opening diameter of the passageways is greater than or equal to 0.7 nm and the silica/alumina ratio is greater than or equal to 6, which process consists in attacking the crude synthetic form of the zeolite containing the organic structuring agent with an acid, characterised in that the zeolite is a beta zeolite, the acid is an acid solution having a molarity of between 2 and 15N and preferably between 5 and 15N and the removal of aluminium is carried out at a temperature of between 20 and 100°C and preferably between 70 and 90°C.

2. Process according to Claim 1, characterised in that the crude synthetic zeolite corresponds to the formula:

$$\tfrac{x}{n} M_2O \cdot yS \cdot Al_2O_3 \cdot z\, SiO_2 \cdot wH_2O$$

wherein

M is a metal cation of valency n,
S is the structuring agent
$\tfrac{x}{n}$ is less than 1
y is from 0.5 to 8
z is from 6 to 200
w is from 4 to 50.

3. Process according to Claim 1 or 2, characterised in that the crude synthetic zeolite is separated from its mother liquors before the acid attack.

4. Process according to Claim 1 or 2, characterised in that the crude synthetic zeolite is not separated from its mother liquors before the acid attack.

5. Process according to any one of Claims 1 to 4, characterised in that the acid is a strong organic acid, such as formic acid, trichloroacetic acid or trifluoroacetic acid.

6. Process according to any one of Claims 1 to 4, characterised in that the acid is a strong inorganic acid, such as hydrochloric acid, sulphuric acid or nitric acid, preferably nitric acid.

7. Process according to any one of Claims 1 to 6, characterised in that from 5 to 150 ml of acid solution are used per gram of dry zeolite or zeolite in suspension.

8. Process according to any one of Claims 1 to 7, characterised in that the duration of the removal of aluminium is between 1 and 40 hours and preferably between 3 and 30 hours.

9. Use of the beta zeolites from which aluminium has been removed by the process according to any one of Claims 1 to 8 in cracking catalysts in petrochemistry and in refining.

10. Selective organophilic adsorbent, characterised in that it contains a zeolite from which aluminium has been removed by the process according to any one of Claims 1 to 8.

11. Substantially silicic beta zeolite, characterised by a silica/alumina ratio greater than or equal to 800 and a crystallinity greater than or equal to 80%.

12. Zeolite according to Claim 11, characterised by a silica/alumina ratio greater than or equal to 4000 and a crystallinity greater than or equal to 80%.

**Patentansprüche**

1. Verfahren zur Entaluminierung von großporigen synthetischen Zeolithen mit einem Mündungsdurchmesser der Kanäle von über oder gleich 0,7 nm und einem Verhältnis von Kieselerde : Tonerde von über oder gleich 6 durch Angriff der rohen Syntheseform des das organische Strukturierungsmittel enthaltenden Zeoliths durch eine Säure, dadurch **gekennzeichnet**, daß der Zeolith ein β-Zeolith ist, die Säure eine saure Losung mit einer Molarität zwischen 2 und 15N und vorzugsweise zwischen 5 und 15N ist und die Entaluminierung bei einer Temperatur zwischen 20 und 100°C und vorzugsweise zwischen 70 und 90°C durchgeführt wird.

2. Verfahren nach Anspruch 1, dadurch **gekennzeichnet**, daß der rohe Synthesezeolith der Formel

$$x/n \, M_2O \, . \, yS \, . \, Al_2O_3 \, . \, zSiO_2 \, . \, wH_2O$$

entspricht,
wobei

M ein Metallkation der Wertigkeit n ist,
S das Strukturierungsmittel ist,
x/n unter 1 liegt,
y = 0,5 bis 8,
z = 6 bis 200 und
w = 4 bis 50.

3. Verfahren nach Anspruch 1 oder 2, dadurch **gekennzeichnet**, daß der rohe Synthesezeolith von seinen Mutterlaugen vor dem Säureangriff abgetrennt wird.

4. Verfahren nach Anspruch 1 oder 2, dadurch **gekennzeichnet**, daß der rohe Synthesezeolith von seinen Mutterlaugen vor dem Säureangriff nicht abgetrennt wird.

5. Verfahren nach einem der Ansprüche 1 bis 4, dadurch **gekennzeichnet**, daß die Säure eine starke organische Säure wie Ameisen-, Trichloressig- oder Trifluoressigsäure ist.

6. Verfahren nach einem der Ansprüche 1 bis 4, dadurch **gekennzeichnet**, daß die Säure eine starke anorganische Säure wie Salz-, Schwefel- oder Salpetersäure und vorzugsweise Salpetersäure ist.

7. Verfahren nach einem der Ansprüche 1 bis 6, dadurch **gekennzeichnet**, daß man 5 bis 150 ml saure Lösung pro Gramm trockener oder suspendierter Zeolith verwendet.

8. Verfahren nach einem der Ansprüche 1 bis 7, dadurch **gekennzeichnet**, daß die Dauer der Entaluminierung 1 bis 40 Stunden und vorzugsweise 3 bis 30 Stunden beträgt.

9. Verwendung von nach den Verfahren nach einem der Ansprüche 1 bis 8 entaluminierten β-Zeolithen in Krackkatalysatoren in der Petrochemie und bei der Raffinierung.

10. Selektives organophiles Adsorbens, dadurch **gekennzeichnet**, daß es einen nach einem der Ansprüche 1 bis 8 entaluminierten Zeolith enthält.

11. Im wesentlichen Kieselsäure enthaltender β-Zeolith, dadurch **gekennzeichnet**, daß er ein Verhältnis von Kieselerde : Tonerde von über oder gleich 800 und eine Kristallinität von über oder gleich 80 % aufweist.

12. Zeolith nach Anspruch 11, dadurch **gekennzeichnet**, daß er ein Verhältnis von Kieselerde : Tonerde von über oder gleich 4000 und eine Kristallinität von über oder gleich 80 % aufweist.